# EUROPEAN PATENT APPLICATION

(11) **EP 4 074 226 A1**
(43) Date of publication of application: **19.10.2022**
(21) Application number: 22167753.7
(22) Date of filing: 12.04.2022
(51) Int. Cl.: A47J 31/40, A47J 31/46

(54) **A PROCESS FOR OBTAINING A BEVERAGE FROM A SINGLE-USE CAPSULE AND DEVICE FOR ACTUATION OF THE PROCESS**

(30) Priority: 12.04.2021 IT 202100009059
(71) Applicant: Happy Water S.r.l., 66016 Guardiagrele (CH) (IT)
(72) Inventor: CAPUZZI, Carmine, Guardiagrele (CH) (IT)
(74) Representative: Dall'Olio, Christian

(57) **Abstract**

A process for obtaining a beverage from a capsule (1) containing concentrated liquid and/or powdery substances (S), comprises following steps: positioning the capsule (1) in a station, with the lower portion (2a) of the capsule in contact with a support element, comprising an opening (P), beneath which a recipient (R) is removably located in order to receive the beverage; introducing, into the capsule (1), a pressurised gaseous substance, with a consequent tearing, or detaching, of the sealing layer (22) inside the capsule (1) with a consequent exiting of the substance (S) in order to be conveyed into the recipient (R); conveying, in phase relation with the introduction of the gaseous substance in the capsule (1), water into said recipient (R) in such a way that the substance (S), in outlet from the capsule (1), and the water in inlet into the recipient (R), mix together in the recipient (R) to obtain the beverage.

## Description

The present invention relates to a process for obtaining a beverage from a single-use capsule containing concentrated liquid and/or powdery substances which enable obtaining corresponding beverages, for example fruit juices, tea, coffee, etc.

The present invention also concerns a device for actuating the above-mentioned process.

Powdery and/or granular substances and/or liquid concentrates are known which, on encountering water, enable obtaining corresponding beverages; by way of example soluble concentrated substances, coffee, tea, fruit juice, etc.

It is also known to use single-use capsules, at least partially filled with the substances, substantially constituted by a sort of beaker, made of a food grade material, either rigid or semi-rigid, the open head of which, following the introduction into the beaker of a determined quantity of substances, is closed and sealed by a film made of a suitable food grade material.

The capsule is arranged, with the film facing upwards, in a seat of a device provided with: first perforating means which perforate the film; means for supplying, acting in phase relation with the first perforating means, which inject a liquid (usually water) into the capsule through the holes generated by the first perforating means; and lastly second perforating means, acting in phase relation with the means for supplying, which perforate the bottom of the capsule.

The water that strikes the soluble substances generates a beverage that exits from the holes generated in the bottom and then is poured into an underlying container (beaker, cup, etc.).

The above-mentioned first and second perforating means come into contact with the inside of the capsule, and are then subjected to the action of the substances and the beverage obtainable therewith.

The second perforating means are easily accessible from outside, so there are no issues relating to the maintenance thereof, in particular in cleaning them.

The first perforating means are arranged internally of the device, and are not easily accessible; the maintenance thereof is therefore very problematic as it requires the demounting of at least the part of the device comprising the first means as well as the means for supplying. It follows that the person managing the device, for the above-mentioned reasons, only rarely carries out maintenance operations on the first perforating means on which, consequently, moulds and bacterial loads proliferate, with all the drawbacks that this entails, in particular from the sanitary point of view.

The aim of the invention is to provide a process which, by means of the substances contained internally of a single-use capsule, enables obtaining a beverage that has no presence of moulds or bacterial loads.

A further aim of the invention is to provide a device conformed in such a way as to actuate the above-mentioned process and such as to limit the maintenance operations on the relative means operating on the capsule.

The above-mentioned advantages are obtained according to the contents of the claims.

The characteristics of the invention are specified in the following with particular reference to the accompanying tables of drawings, in which:
- figure 1 is a schematic perspective view of a device for actuating the process of the invention;
- figure 1A is a larger-scale perspective view of the internal components of the device of figure 1, arranged in a non-operating configuration;
- figure 1B is a larger-scale perspective view of a section, according to a vertical plane, of the device of figure 1, in which a section of a single-use capsule and an empty container for beverages are indicated;
- figure 2 is a larger-scale lateral view of a single-use capsule used during the process of the invention;
- figure 3 is a view of section O-O of figure 2;
- figure 3A is a larger-scale view of detail Z of figure 3;
- figure 4 is a schematic perspective view of the structure of the device of figure 1B in the operating configuration;
- figure 4A is a view of the device of figure 1B with the internal components of the device arranged in an operating configuration in which the recipient is filled with the beverage;
- figure 4B is a larger-scale view of detail L of figure 4;
- figure 4C is a larger-scale view of detail A of figure 4.

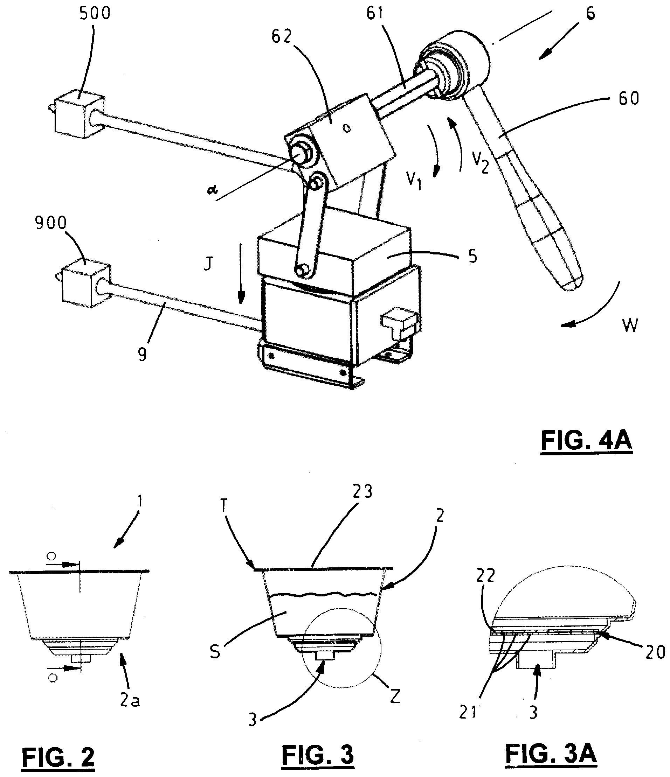

With reference to the appended tables of drawings, reference numeral (1) denotes a single-use capsule of known type comprising a beaker (2) (figure 3), preferably made of a food grade material, for example rigid or semi-rigid, the lower portion (2a) of which, for example tapered in a downwards direction, comprises an outlet mouth (3).

The beaker further comprises: a base (20), for example a disc comprising a series of through-holes (21), positioned internally of the beaker (2); a sealing layer (22), preferably made of a food grade material, which closes and seals the upper face of the base (20) and, consequently, isolates the inside of the beaker (2) from the outlet mouth (3); a film (23), made of a food grade material, which closes and seals the head (T) of the beaker (2).

The beaker (2) is partly filled, using known methods, with concentrated liquid and/or powdery substances selected for obtaining corresponding beverages. As will be evidenced in the following, in use conditions the capsule is arranged in the traditional way with the film (23) facing upwards and the lower portion (2a) of the beaker in contact with an abutment element (81) of a drawer (8) which will be described in the following.

Following the piercing of the film (23) and the introduction into the capsule of a gaseous substance a tearing, or detaching is caused of the sealing layer (22); the substance (S), by force of pressure, passes through the holes (21) of the base (20) to exit from the outlet mouth (3), and consequently, by falling, outwards into an underlying recipient (R).

In phase relation with the introduction of the gaseous substance in the capsule, water is conveyed into the recipient (R) internally of which the water and the substance (S) are mixed to obtain a beverage corresponding to the substance (S) contained in the capsule.

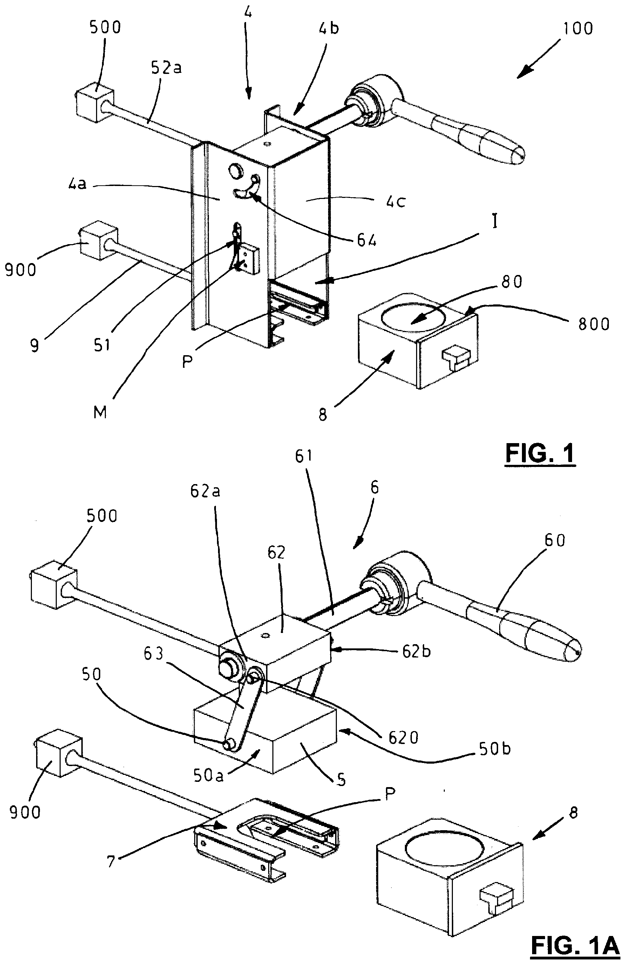

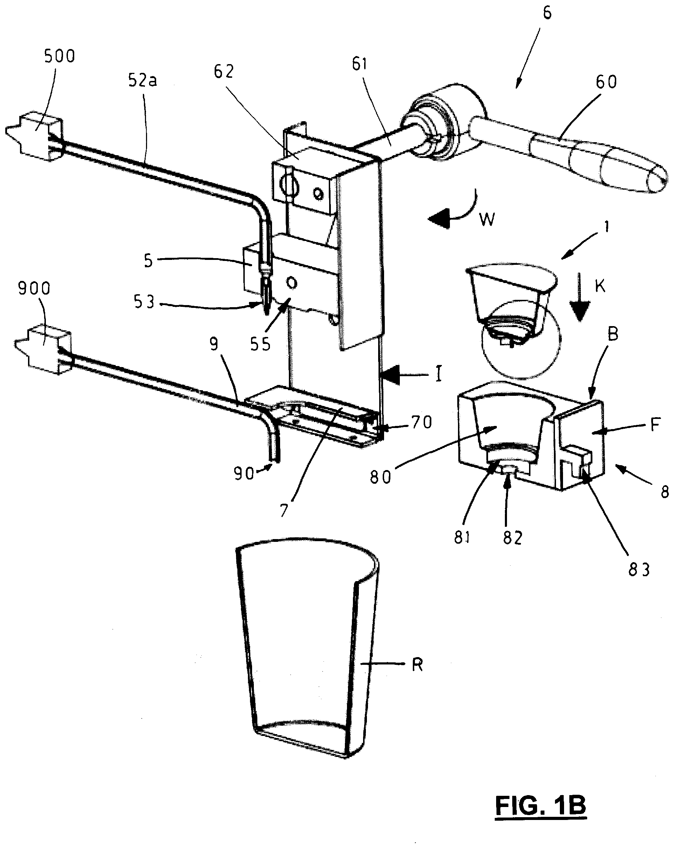

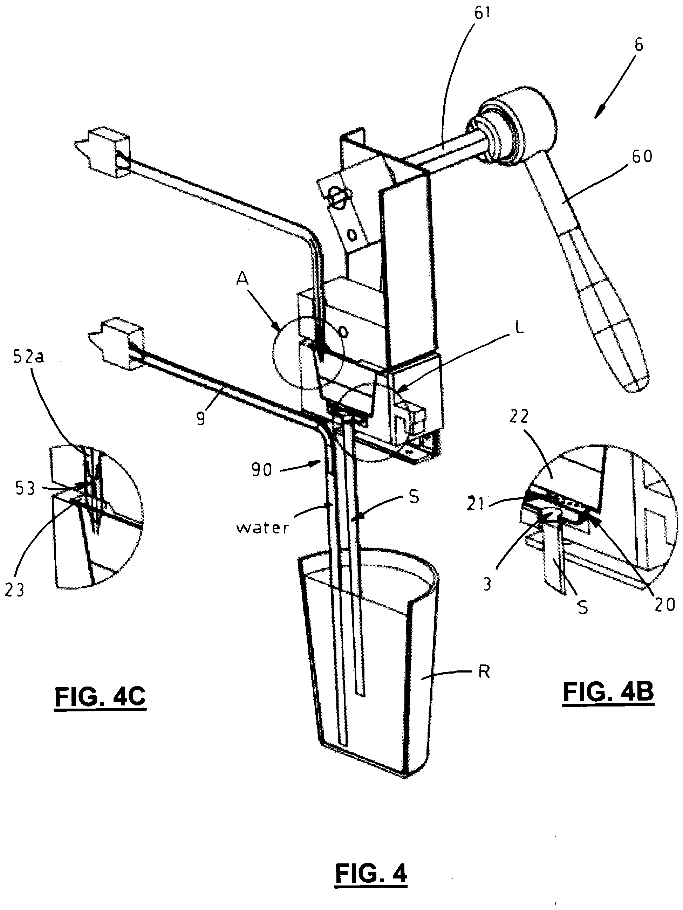

Figures 1, 1B and 4 illustrate a device (100) conformed in such a way as to operate on the capsule (1) and to consequently actuate the process.

The device (100) comprises a support and guide structure (4) which is provided with an inlet (I). The support and guide structure (4) preferably includes two lateral walls, a first and second wall (4a, 4b), opposite one another and frontally connected by a third wall (4c), of a lower height than the first and second wall (4a, 4b), to identify, in the structure (4), the inlet (I).

The structure (4) internally comprises: a first body (5) forming a thickness (55) centrally in the lower face and comprising first pivots (50) (figure 1A), fixed in opposite faces (50a, 50b) of the first body, which, in cooperation with first slots (51) made in the first and second wall (4a, 4b), enable the vertical movement of the first body (5) from above in a downwards direction, and vice versa; a piercing means (53), for example an axially pierced point and having a cutting end, projecting from the lower face of the first body (5), for example, posteriorly of the thickness (55), the piercing means (53) being connected by means of a first pipeline (52a), to a first tank, not illustrated, of a gaseous substance; actuation means (6) connected to the first body (5) for vertical movement thereof internally of the structure (4), as more fully explained in the following.

The structure (4) further comprises: a support element (7) comprising an opening (P) (for example a U-shaped plate), and for example transversally fixed to the structure (4) to supports (70) blocked, in a mutually-opposite position, to the first and second wall (4a, 4b); a drawer (8), for internally receiving the capsule (1), guided and supported internally of the structure (4) by the support element (7); a second pipeline (9), connected to a source, or a second tank, of water, not illustrated, the outlet (90) of which is located below the opening (P) of the support element (7); a first activating means (M), for example a microswitch, blocked, for example externally, to the first wall (4a) of the structure; a second activating means (500), for example a solenoid valve, connected to the first pipeline (52a) and controlled by the first activating means (M) for the activation of the dispensing of the gaseous substance; a third activating means (900), for example a solenoid valve, connected to the second pipeline (9) and controlled by the first activating means (M) for the activation of the dispensing of the water.

In the illustrated embodiment of the appended tables of drawings, the actuation means (6)comprise: a second body (62), for example a small block, pivoted between the first and second wall (4a, 4b), comprising second pivots (620) fixed in opposite faces (62a, 62b) of the second body (62) which, in cooperation with curved second slots (64) made in the first and second wall (4a, 4b), enable the rotation of the activating element (62) with respect to the transversal axis (α) according to directions (V1, V2) of figure 4A; an activating organ (60), for example an arm, pivoted, by means of a rod (61), to one of the joints of the second body (62); arms (63), each hinged at an end to a corresponding second pivot (620) of the second body (62), and at the other end to a corresponding first pivot (50) of the first body (5).

The drawer (8) (figure1B) comprises a through-seat (80), the internal profile of which forms, for example, the external profile of the capsule (1) and the lower part forms an abutment element (81) centrally offering a through-hole (82) which will be coaxial with the outlet mouth (3) of the capsule (1).

A plate (F) is fixed to a first face (800) of the drawer (8), forming a grip (83) and an abutment (B), which consequently to the insertion of the drawer (8) in the structure (4) abuts the third wall (4c) thereof.

The device (100) is anchored to the means which maintain it in a vertical position so as to make the space underlying the outlet (90) of the second pipeline (9) accessible; a station is made in that space, not illustrated in the figures of the drawings, on which a recipient (R) is removably positioned in axis with the opening (P) of the support element (7).

In non-operating conditions of the device (100), the first body (5) and the activating organ (60) are in the raised end positions (figures 1A, 1B).

To obtain a beverage, the user inserts the capsule (1) in the seat (80) of the drawer (8) (direction K of figure 1B), in such a way that the bottom of the capsule (2a) is in abutment against the abutment element (81) in the seat (80) and the outlet mouth (3) of the capsule (1) is coaxial with the hole (82) made in the abutment element (81): in this position the film (23) is aligned with the edge of the seat (80) and facing the support element (7).

Following this, the user will insert the drawer (8) into the inlet (I) of the structure (4), to define the abutment between the abutment (B) and the third wall (4c) of the structure (4), in this way the drawer (8) will be completely supported by the support element (7) to define the alignment between the capsule (1) and the thickness (55) of the first body (5).

The user subsequently activates the actuation means (6); the activating organ (60) is rotated in direction W (figure 1B) and, consequently, the second body (62) rotates with respect to the axis α in direction V₁, drawing the first body (5) vertically downwards (direction J of figure 4A) which leads, in order, to the following steps:
- the intercepting of the thickness (55) of the first body (5) and the cutting end of the piercing means (53) against the film (23) of the capsule (1), with a consequent perforation of the film (23);
- injection of a pressurised gaseous substance internally of the capsule (1) to tear, or detach, the sealing layer (22) from the base (20) so as to facilitate the exiting of the substance (S) from the holes (21) and, therefore, from the outlet mouth (3) of the capsule (1) in order to fall internally of the underlying recipient (R);
- in synchrony with the injection of the gaseous substance, supplying, at pressure, the second pipeline (9) with water to pour the water from the outlet (90) into the recipient (R) to define, together with the fall of the substance (S), the mixing, internally of the recipient (R), of the water and the substance (S) so as to obtain the desired beverage.

It is specified that the activation and deactivation of the injection of the gaseous substance and the supply of the water are managed by the activation/deactivation of the first activating means (M) which activates/deactivates, in phase relation, the second and third activating means (500, 900): in the present embodiment the microswitch (M) is controlled by the vertical movement of the first body (5), which opens/closes the corresponding solenoids valve (500, 900).

When the recipient is filled the work cycle closes; the deactivation procedure then begins, of the actuation means (6), the first, second and third activating means (M, 500, 900) and, consequently, of the dispensing of the gaseous substance and of the water.

The first body (5), therefore, is moved upwards, and the second body (62) is rotated with respect to the axis α according to the direction V₂ to reset the non-operating position of the device (100).

The process of the invention has particularly advantageous characteristics, as the process, by means of the substances contained internally of a single-use capsule, enables obtaining a beverage that has no presence of moulds or bacterial loads.

The exiting of the substance from the capsule (1), with the process, takes place by introducing a gaseous substance into the beaker (2) of the capsule (1) under pressure; the change in internal pressure of the beaker (2) is such that the sealing layer (22), which maintains the substance (S) internally of the beaker (2), is torn, or alternative detached, from the base (20), in order to enable the substance (S) to exit from the through-holes (21) thereof and, consequently, from the outlet mouth (3) of the capsule without the substance (S) contacting the piercing means (53) and avoiding contamination.

The beverage will no longer be obtained internally of the capsule, but will instead be obtained internally of the recipient (R) that contains it; the components utilised for enabling the injection of the water to obtain a beverage in no way come into contact with the substance present in the capsule (1).

It follows that the piercing means (53) of the film (23) and the components for dispensing the water do not require maintenance operations as no moulds, bacterial loads or any other substance form on them, with all the advantages that brings, especially in sanitary terms.

It is understood that the above has been described by way of example and that technical-functional variants are considered to fall within the protective scope of the invention as claimed in the following.

## Claims

1. A process for obtaining a beverage from a capsule (1) containing concentrated liquid and/or powdery substances (S), the capsule (1) comprising a beaker (2), the lower portion (2a) of which comprises an outlet mouth (3) internally occluded by at least a sealing layer (22), and a head (T) of which is sealed by a film (23), the process being **characterised in that** it comprises:
a) positioning the capsule (1) in a station, with the lower portion (2a) of the capsule in contact with a support element, comprising an opening (P), beneath which a recipient (R) is removably located in order to receive the beverage to be obtained;
b) realising in the film (23) at least a hole;
c) introducing into the capsule (1), through the at least a hole generated by the piercing of the film (23), a pressurised gaseous substance, with a consequent tearing, or detaching, of the sealing layer (22) inside the capsule (1) with a consequent exiting of the substance (S) from the outlet mouth (3) in order to be conveyed from the opening (P) of the support element to the recipient (R) beneath the support element;
d) conveying, in phase relation with the introduction of the gaseous substance in the capsule (1), water into said recipient (R) in such a way that the substance (S), in outlet from the capsule (1), and the water in inlet into the recipient (R), mix together in the recipient (R) to obtain the beverage.

2. A process for obtaining a beverage from a capsule (1) of claim 1, wherein the beaker (2) comprises a base (20) positioned internally of the beaker (2), comprising a series of through-holes (21), with the upper face of the base (20) being closed and sealed by the sealing layer (22) to isolate the inside of the beaker (2) from the outlet mouth (3), the process being **characterised in that** during step c) the substance (S), consequently to the tearing, or detachment, of the film (23) passes through the holes (21) of the base (20) to exit from the outlet mouth (3).

3. A process for obtaining a beverage from a capsule (1) of claim 1 or 2, **characterised in that** following step d), a step e) is included in which upon the filling of the recipient (R) there is a deactivation of the dispensing of the gaseous substance and the dispensing of the water.

4. A device for obtaining a beverage from a single-use capsule, containing concentrated liquid and/or powdery substances (S), the capsule (1) comprising a small beaker (2), the lower portion (2a) of which comprises an outlet mouth (3) internally occluded by at least a sealing layer (22), and the head (T) of which is sealed by a film (23), the device comprising a support and guide structure (4) which is provided with an inlet (I), and **characterised in that** it comprises: a drawer (8), having a through-seat (80), for removably receiving the capsule (1) the lower portion (2a) thereof facing downwards resting on an abutment element (81) conformed by the surface delimiting the seat (80); a support element (7) comprising an opening (P), which is carried by the support and guide structure (4) and which is suitable for restingly receiving the drawer (8) so that the seat (80) thereof is coaxial to the opening (P) of the support element (7); actuation means (6); a first body (5), made vertically movable internally of the support and guide structure (4) by the actuation means (6) between a raised position and a lowered position, to abut the film (23) sealing the head (T) of the capsule (1) and to block the position of the capsule (1) internally of the structure (4); at least a piercing means (53), projecting from the lower face of the first body (5), to intercept and pierce the film (23) of the capsule (1) following the lowering of the first body (5); first means for supplying a gaseous substance, cooperating with the at least a piercing means (53), for injecting, at pressure, the gaseous substance into the capsule (1) through the hole on the film (23) to tear, or detach, the sealing layer (22), internally of the capsule (1), so as to enable the exiting of the substance (S) from the outlet mouth (3) in order to fall, passing beyond the opening (P) of the support element (7), into a recipient (R) positioned below the support element (7); second means for supplying water, associated to the structure (4) below the support element (7), included to convey the water into the recipient (R); a first activating means (M) destined to activate, in phase relation, the first and second means for supplying in order to enable the substance (S) and the water to fall and mix internally of the recipient (R) to obtain the desired beverage.

5. The device of claim 4, **characterised in that** the first means for supplying comprise a first pipeline (52a) connected, through a second activating means (500), to a first gas tank and to the piercing means (53) included in the body (5), and **in that** the second means for supplying water comprise a second pipeline (9), the outlet (90) of which is located below the opening (P) of the support element (7), and is connected, through a third activating means (900), to a source, or second tank, of water.

6. The device of claim 4 or 5, **characterised in that** the first body (5) forms a thickness (55) centrally in the lower face and comprises first pivots (50) fixed in opposite faces (50a, 50b), of the first body (5) which, in cooperation with first slots (51) included internally of the support and guide structure (4), enable the vertical movement of the first body (5) from above in a downwards direction, and vice versa.

7. The device of claim 4 or 6, **characterised in that** said actuation means comprise:
a second body (62), pivoted between a first and a second wall (4a, 4b) opposed to each other of the support and guide structure (4), comprising second pivots (620) fixed in opposite faces (62a, 62b) of the second body (62) which, in cooperation with curved second slots (64) made in the first and second wall (4a, 4b), enable the rotation of the second body (62) with respect to the transversal axis (α) according to directions (V1, V2); an activating organ (60) hinged, by means of a rod (61), to one of the joints of the second body (62) which following the movement thereof enables the rotations of the second body (62); arms (63), each hinged at an end to a corresponding second pivot (620) of the second body (62), and at the other end to a corresponding first pivot (50) of the first body (5), cooperating with the second body (62) to enable the vertical movement of the first body (5).

8. The device of claim 4, **characterised in that** the drawer (8) further comprises, a plate (F), fixed to a first face (800) of the drawer (8), forming a grip (83) and an abutment (B), which consequently to the insertion of the drawer (8) in the structure (4) abuts a third wall (4c) thereof.

9. The device of claim 4 or 5, **characterised in that** the piercing means (53) comprises a cutting point axially pierced and connected to the first pipeline (52a) destined to pierce the film (23) and through which the gaseous substance is injected into the capsule (1).

10. The device of the preceding claims, **characterised in that** the beaker (2) comprises a base (20), positioned internally of the beaker (2), comprising a series of through-holes (21), with the upper face of the base (20) being closed and sealed by the sealing layer (22) to isolate the inside of the beaker (2) from the outlet mouth (3).
